# EUROPÄISCHE PATENTSCHRIFT

(11) **EP 4 374 700 B1**
(45) Veröffentlichungstag und Bekanntmachung des Hinweises auf die Patenterteilung: **20.08.2025**
(21) Anmeldenummer: 23209308.8
(22) Anmeldetag: 13.11.2023
(51) Int. Cl.: A21C 9/08

(54) **VERFAHREN ZUM HERSTELLEN VON TEIGPRODUKTEN**
METHOD FOR PRODUCING DOUGH PRODUCTS
PROCÉDÉ DE FABRICATION DE PRODUITS À BASE DE PÂTE

(30) Priorität: 25.11.2022 DE 102022131225
(43) Veröffentlichungstag der Anmeldung: 29.05.2024
(73) Patentinhaber: Fritsch Bakery Technologies GmbH & Co. KG, 97348 Markt Einersheim (DE)
(72) Erfinder: Gier, Michael, 97318 Kitzingen (DE); Lehmann, Oliver, 97941 Tauberbischofsheim (DE)
(74) Vertreter: Grünecker Patent- und Rechtsanwälte PartG mbB

(56) Entgegenhaltungen:
- DE-A1- 2 105 799
- US-A- 2 823 625
- US-A- 3 953 613
- US-A- 6 098 782

## Beschreibung

Die Erfindung bezieht sich auf Verfahren zum Herstellen von Teigprodukten, wie bekannt aus US 2,823,625 A und DE2105799A1.

Teigprodukte werden in einer Vielzahl von Formen angeboten. Manche traditionell in Handarbeit erzeugten Formen stellen für die industrielle Produktion eine Herausforderung dar. Es ist denkbar, beliebig komplexe Vorrichtungen zur Herstellung jeweils eine dieser Vielzahl von traditionell in Handarbeit erzeugten Formen zu Konstruieren. Eine spezialisierte Vorrichtung für jede einzelne Form ist jedoch durch erforderliche Umrüstungen ineffizient und allenfalls bei sehr hohen Stückzahlen praktikabel.

Es sind Vorrichtungen zur Herstellung von Teigprodukten bekannt, die zwei oder mehr Förderbänder umfassen auf denen Teigportionen gefördert werde. Konventionell werden sie dazu eingesetzt, Abstände zwischen den geförderten Teigportionen gezielt einzustellen, bspw. indem die Teigportionen zwischen Förderbändern, die mit unterschiedlichen Geschwindigkeiten angetrieben werden, übergeben werden.

Es ist eine Aufgabe der vorliegenden Erfindung, ein Verfahren anzugeben, das die Vielfalt der durch konventionelle Vorrichtungen erzeugbaren Formen von Teigprodukten erhöht. Diese Aufgabe wird gelöst durch ein Verfahren mit den Merkmalen des Anspruchs 1.

Es wird ein Verfahren zum Herstellen von Teigprodukten offenbart. Das Verfahren umfasst Bereitstellen eines ersten Teigstücks auf einem ersten Förderer, Anliefern eines zweiten Teigstücks auf einem zweiten Förderer und Ablegen des zweiten Teigstücks auf dem ersten Teigstück, während das erste Teigstück auf dem ersten Förderer angeordnet ist, wobei das zweite Teigstück während des Ablegens gefaltet wird.

Durch das Falten und Ablegen des zweiten Teigstücks auf dem ersten Teigstück kann die Erzeugung einer Form von Teigprodukt ermöglicht werden, die einem traditionell in Handarbeit erzeugten Produkt ähnelt, ohne dass dafür eine spezielle Vorrichtung konstruiert bzw. vorgehalten werden muss. Dadurch kann das Einsatzspektrum konventioneller Vorrichtungen zum Herstellen von Teigprodukten erweitert und gleichzeitig der Anteil an Handarbeit bei der Herstellung traditioneller Teigprodukte reduziert werden.

Das Verfahren kann des Weiteren ein Übergeben des ersten Teigstücks von dem zweiten Förderer an den ersten Förderer vor dem Bereitstellen des ersten Teigstücks auf dem ersten Förderer umfassen. So können das erste und das zweite Teigstück durch denselben Förderer, insbesondere den zweiten Förderer, angeliefert werden. Das kann den Vorrichtungsaufbau vereinfachen, da das erste und das zweite Teigstück nicht zunächst auf mehreren Förderern transportiert werden müssen. Dies kann insbesondere in Kombination mit Ausführungen vorteilhaft sein, in denen das erste und das zweite Teigstück von demselben Teigstrang abgetrennt werden, da die Teigstücke nicht zunächst auf zwei Förderer aufgeteilt werden müssen.

Es ist denkbar, dass das Verfahren des Weiteren Einschlagen des ersten und zweiten Teigstücks, nachdem das zweite Teigstück auf dem ersten Teigstück abgelegt wurde, umfassen kann. Das Einschlagen kann bspw. durch ein Wickelband oder ein mit den Teigstücken von oben eingreifendes gegenläufiges Förderband erfolgen. Durch das Einschlagen des ersten und des gefaltet darauf liegenden zweiten Teigstücks kann eine gewünschte Form von Teigprodukt erzeugt werden.

Vorteilhafterweise kann der erste Förderer ein erstes Förderband umfassen. Zusätzlich oder alternativ kann der zweite Förderer ein zweites Förderband umfassen.

Es kann vorteilhaft sein, wenn das zweite Teigstück derart gefaltet wird, dass ein Falz in eine Produktionsrichtung weist. Dadurch kann das Einschlagen erleichtert oder unterstützt werden, z. B. derart, dass die gewünschte Form von Teigprodukt erzeugt wird. Die Produktionsrichtung kann einer Richtung entsprechen, in welcher die Teigstücke, bzw. davor der Teigstrang und danach die Teigprodukte, die verschiedenen Verarbeitungsschritte durchlaufen. Die Produktionsrichtung muss nicht notwendigerweise an jeder Stelle einer Förderrichtung entsprechen. Bspw. können der Teigstrang, die Teigstücke oder die Teigprodukte an einzelnen Stellen entgegen der Produktionsrichtung gefördert werden.

Das Verfahren kann ein Abtrennen des ersten und zweiten Teigstücks von einem, insbesondere von ein und demselben, Teigstrang vor dem Bereitstellen des ersten Teigstücks auf dem ersten Förderer umfassen. Alternativ oder zusätzlich kann das Verfahren des Weiteren Abtrennen des ersten und zweiten Teigstücks von einem Teigstrang vor dem Übergeben des ersten Teigstücks von dem zweiten Förderer an den ersten Förderer umfassen. Durch das Abtrennen des ersten und zweiten Teigstücks aus einem Teigstrang kann das Ausführen des Verfahrens durch herkömmliche Teigverarbeitungsvorrichtungen erleichtert werden, denn Vorrichtungen zum einfachen Abtrennen von Teigstücken aus einem Teigstrang sind weit verbreitet.

Besonders günstig kann es sein, wenn das erste und das zweite Teigstück aufeinanderfolgend abgetrennt und vorzugsweise gefördert werden. Durch aufeinanderfolgend abgetrennte und/oder geförderte erste und zweite Teigstücke kann auf einfache Art und Weise ermöglicht werden, dass die Teigstücke in einer besonders geeigneten Reihenfolge bei dem ersten und oder zweiten Förderer ankommen. Dadurch kann das Verfahren effizienter ausgeführt werden. Bspw. können durch aufeinanderfolgendes Abtrennen und Fördern der Teigstücke Sortier- und/oder Beabstandungsvorgänge eingespart werden.

Vorteilhafterweise kann der zweite Förderer während des Ablegens eine höhere Fördergeschwindigkeit in einer Produktionsrichtung aufweisen als der erste Förderer. Die Fördergeschwindigkeit des ersten Förderers kann dabei auch Null sein, d. h. der erste Förderer kann während des Ablegens angehalten sein. Alternativ kann die Fördergeschwindigkeit des ersten Förderers in Produktionsrichtung negativ sein, d. h. der erste Förderer kann entgegen der Produktionsrichtung bzw. rückwärts fördern. Es sollte klar sein, dass in Fällen, in denen der erste Förderer entgegen der Produktionsrichtung fördert und der zweite Förderer in der Produktionsrichtung fördert, der zweite Förderer eine höhere Fördergeschwindigkeit in Produktionsrichtung aufweist als der erste Förderer, unabhängig davon wie schnell der jeweilige Förderer fördert. Durch die geringere Fördergeschwindigkeit des ersten Förderers in der Produktionsrichtung während des Ablegens kann das Falten des zweiten Teigstücks auf dem ersten Teigstück unterstützt und/oder gezielt gesteuert werden.

Sämtliche vorstehend beschriebenen Verfahrensschritte können auch auf mehrere erste bzw. zweite Teigstücke gleichzeitig angewendet werden. Insbesondere ist es denkbar, dass mehrere erste bzw. zweite Teigstücke in jeweils einer Reihe, die sich im Wesentlichen quer, vorzugsweise senkrecht, zu der Produktionsrichtung erstrecken kann, bereitgestellt, übergeben, abgelegt und/oder gefaltet werden. Besonders günstig kann es sein, wenn ein Teigband vor dem Abtrennen der Teigstücke in mehrere Teigstränge aufgeteilt wird. Von jedem der Teigstränge können dann die Teigstücke wie oben beschrieben abgetrennt werden.

Die Erfindung bezieht sich außerdem auf ein Teigprodukt, das durch ein Verfahren der vorstehend beschriebenen Art hergestellt wurde.

Die Erfindung bezieht sich auf ein Verfahren zum Erzeugen von Teigprodukten sowie auf ein Teigprodukt der vorstehend beschriebenen Art. Im Folgenden wird eine Ausführungsform beispielhaft anhand von Zeichnungen näher erläutert.
- Figur 1: zeigt eine schematische Draufsicht von oben einer Teigabtrennvorrichtung.
- Figur 2: zeigt eine schematische Seitenansicht einer Faltvorrichtung.
- Figur 3: zeigt eine schematische Seitenansicht einer Wickelvorrichtung.

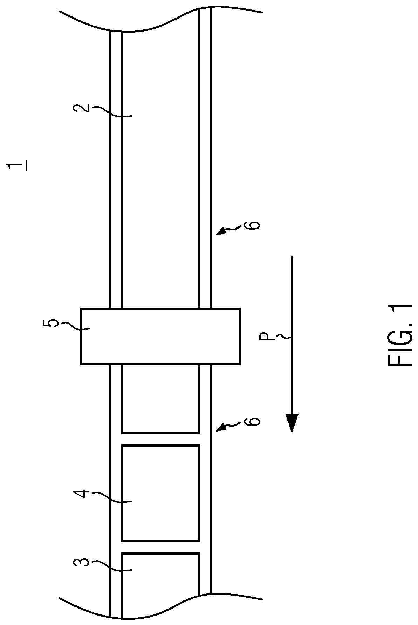

In Figur 1 ist eine Teigabtrennvorrichtung 1 in einer schematischen Draufsicht von oben dargestellt. Die Teigabtrennvorrichtung 1 kann dazu konfiguriert sein, Teigstücke von einem Teigstrang 2 abzutrennen. Insbesondere können durch aufeinanderfolgende Abtrennvorgänge ein erstes Teigstück 3 und ein zweites Teigstück 4 erzeugt werden. Die Teigabtrennvorrichtung 1 kann eine Schneidvorrichtung 5 umfassen. Die Teigabtrennvorrichtung 1 kann des Weiteren in bekannter Weise Fördereinrichtungen 6 umfassen. Eine Produktionsrichtung P kann als eine Richtung definiert sein, in welcher der Teigstrang 2 und/oder die Teigstücke 3, 4 unterschiedliche Verarbeitungsschritte durchlaufen. Wie mit Bezug auf Figur 1 zu erkennen, kann die Produktionsrichtung P von einer Stelle, an welcher der Teigstrang 2 angeliefert wird, zu einer Stelle weisen, an der die von dem Teigstrang 2 abgetrennten Teigstücke 3, 4 vorliegen.

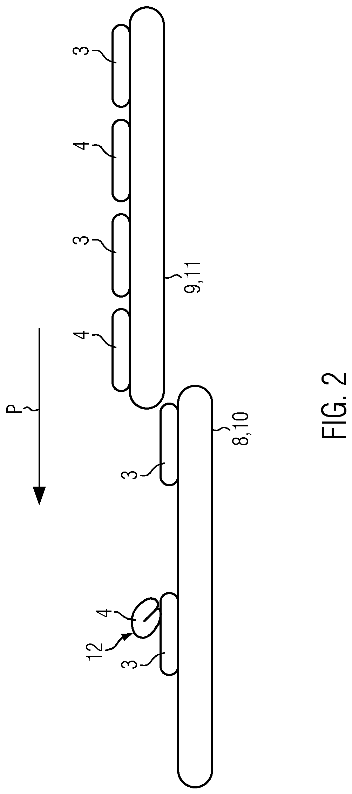

In Figur 2 ist eine Faltvorrichtung 7 in einer schematischen Seitenansicht dargestellt. Die Faltvorrichtung 7 kann einen ersten Förderer 8 umfassen. Die Faltvorrichtung 7 kann des Weiteren einen zweiten Förderer 9 umfassen. Der erste Förderer 8 kann ein erstes Förderband 10 umfassen. Der zweite Förderer 9 kann ein zweites Förderband 11 umfassen. Der zweite Förderer 9, insbesondere das zweite Förderband 11, kann dazu konfiguriert sein, das erste Teigstück 3 an den ersten Förderer 8, insbesondere an das erste Förderband 10, zu übergeben. In Figur 2 ist ein Zustand unmittelbar nach der Übergabe des ersten Teigstücks 3 von dem zweiten Förderer 9, insbesondere von dem zweiten Förderband 11, an den ersten Förderer 8, insbesondere an das erste Förderband 10, dargestellt. In diesem Zustand kann das erste Teigstück 3 auf dem ersten Förderer 8, insbesondere auf dem ersten Förderband 10, bereitgestellt werden. Wie in Figur 2 gezeigt, kann das zweite Teigstück 4 auf dem zweiten Förderer 9, insbesondere auf dem zweiten Förderband 11, angeliefert werden. Während das erste Teigstück 3 auf dem ersten Förderer 8, insbesondere auf dem ersten Förderband 10, angeordnet ist, kann das zweite Teigstück 4 auf dem ersten Teigstück 3 abgelegt werden. Während des Ablegens kann das zweite Teigstück 4 gefaltet werden. Ein gefaltet abgelegtes zweites Teigstück 4 ist links in der Figur 2 zu erkennen. Wie dort gezeigt, kann ein Falz 12 des gefalteten zweiten Teigstücks 4 in Produktionsrichtung P weisen.

Der zweite Förderer 9 kann identisch mit einer der Fördereinrichtungen 6 der Teigabtrennvorrichtung 1 sein. Wie in Figur 2 zu erkennen, kann die Produktionsrichtung P von einer Stelle, an welcher die Teigstücke 3, 4 aufeinanderfolgend gefördert werden in Richtung einer Stelle weisen, an der die Teigstücke 3, 4 aufeinanderliegend gefördert werden.

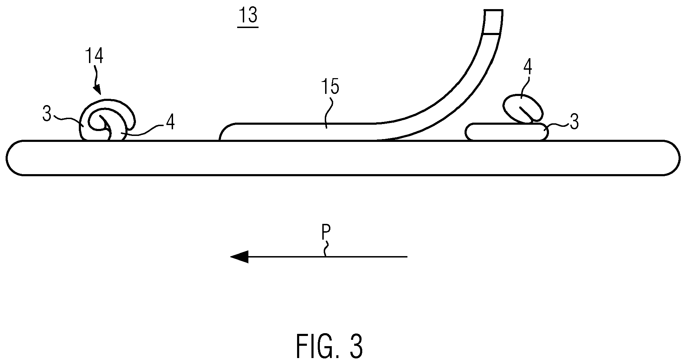

In Figur 3 ist eine Wickelvorrichtung 13 in einer schematischen Seitenansicht dargestellt. Die Wickelvorrichtung 13 kann dazu konfiguriert sein, das erste und das zweite Teigstück 3, 4 einzuschlagen. Durch das Einschlagen der Teigstücke 3, 4 kann ein Teigprodukt 14 erzeugt werden. Die Wickelvorrichtung 13 kann eine Wickelmatte 15 umfassen. Wie in Figur 3 zu erkennen, kann die Produktionsrichtung P von einer Stelle, an welcher die Teigstücke 3, 4 aufeinanderliegend gefördert werden, in Richtung einer Stelle weisen, an der die Teigstücke 3, 4 im eingeschlagenen Zustand als Teigprodukt 14 vorliegen.

## Patentansprüche

1. Verfahren zum Herstellen von Teigprodukten (14), umfassend:
Bereitstellen eines ersten Teigstücks (3) auf einem ersten Förderer (8),
Anliefern eines zweiten Teigstücks (4) auf einem zweiten Förderer (9),
Ablegen des zweiten Teigstücks (4) auf dem ersten Teigstück (3), während das erste Teigstück (3) auf dem ersten Förderer (8) angeordnet ist, **dadurch gekennzeichnet, dass** das zweite Teigstück (4) während des Ablegens gefaltet wird.

2. Verfahren nach Anspruch 1, des Weiteren umfassend Übergeben des ersten Teigstücks (3) von dem zweiten Förderer (9) an den ersten Förderer (8) vor dem Bereitstellen des ersten Teigstücks (3) auf dem ersten Förderer (8).

3. Verfahren nach Anspruch 1 oder 2, des Weiteren umfassend Einschlagen des ersten und zweiten Teigstücks (3, 4), nachdem das zweite Teigstück (4) auf dem ersten Teigstück (3) abgelegt wurde.

4. Verfahren nach einem der vorangehenden Ansprüche, wobei der erste Förderer (8) ein erstes Förderband (10) umfasst.

5. Verfahren nach einem der vorangehenden Ansprüche, wobei der zweite Förderer (9) ein zweites Förderband (11) umfasst.

6. Verfahren nach einem der vorangehenden Ansprüche, wobei das zweite Teigstück (4) derart gefaltet wird, dass ein Falz (12) in eine Produktionsrichtung (P) weist.

7. Verfahren nach einem der vorangehenden Ansprüche, des Weiteren umfassend Abtrennen des ersten und zweiten Teigstücks (3, 4) von einem Teigstrang (2) vor dem Bereitstellen des ersten Teigstücks (3) auf dem ersten Förderer.

8. Verfahren nach Anspruch 2, des Weiteren umfassend Abtrennen des ersten und zweiten Teigstücks (3, 4) von einem Teigstrang (2) vor dem Übergeben des ersten Teigstücks (3) von dem zweiten Förderer (9) an den ersten Förderer (8).

9. Verfahren nach Anspruch 7 oder 8, wobei das erste und das zweite Teigstück (3, 4) aufeinanderfolgend abgetrennt und vorzugsweise gefördert werden.

10. Verfahren nach einem der vorangehenden Ansprüche, wobei während des Ablegens der zweite Förderer (9) eine höhere Fördergeschwindigkeit in einer Produktionsrichtung (P) aufweist als der erste Förderer (8).

## Claims

1. Method for making dough products (14), the method comprising:
providing a first dough piece (3) on a first conveyor (8),
supplying a second dough piece (4) on a second conveyor (9),
depositing the second dough piece (4) on the first dough piece (3), while the first dough piece (3) is disposed on the first conveyor (8), **characterized in that** the second dough piece (4) is folded during the depositing.

2. Method according to claim 1, further comprising transferring the first dough piece (3) from the second conveyor (9) to the first conveyor (8) prior to providing the first dough piece (3) on the first conveyor (8).

3. Method according to claim 1 or 2, further comprising wrapping the first and the second dough piece (3, 4), after the second dough piece (4) has been deposited on the first dough piece (3).

4. Method according to one of the preceding claims, wherein the first conveyor (8) comprises a first conveyor belt (10).

5. Method according to one of the preceding claims, wherein the second conveyor (9) comprises a second conveyor belt (11).

6. Method according to one of the preceding claims, wherein the second dough piece (4) is folded in such a way that a fold (12) points into a production direction (P).

7. Method according to one of the preceding claims, further comprising severing the first and the second dough piece (3, 4) from a dough strand (2) prior to providing the first dough piece (3) on the first conveyor (8).

8. Method according to claim 2, further comprising severing the first and the second dough piece (3, 4) from a dough strand (2) prior to transferring the first dough piece (3) from the second conveyor (9) to the first conveyor (8).

9. Method according to claim 7 or 8, wherein the first and the second dough piece (3, 4) are consecutively severed and preferably conveyed.

10. Method according to one of the preceding claims, wherein the second conveyor (9) has a higher conveying speed in the production direction (P) than the first conveyor (8) during the depositing.

## Revendications

1. Procédé de fabrication de produits à base de pâte (14), comprenant les étapes consistant à:
disposer un premier morceau de pâte (3) sur un premier convoyeur (8),
délivrer un deuxième morceau de pâte (4) sur un deuxième convoyeur (9),
déposer le deuxième morceau de pâte (4) sur le premier morceau de pâte (3) tandis que le premier morceau de pâte (3) est placé sur le premier convoyeur (8), **caractérisé en ce que** le deuxième morceau de pâte (4) est plié pendant le dépôt.

2. Procédé selon la revendication 1, comprenant en outre le transfert du premier morceau de pâte (3) du deuxième convoyeur (9) au premier convoyeur (8) avant la disposition du premier morceau de pâte (3) sur le premier convoyeur (8).

3. Procédé selon la revendication 1 ou 2, comprenant en outre l'enveloppement des premier et deuxième morceau de pâte (3, 4) après que le deuxième morceau de pâte (4) a été déposé sur le premier morceau de pâte (3).

4. Procédé selon l'une quelconque des revendications précédentes, dans lequel le premier convoyeur (8) comprend une première bande transporteuse (10).

5. Procédé selon l'une quelconque des revendications précédentes, dans lequel le deuxième convoyeur (9) comprend une deuxième bande transporteuse (11).

6. Procédé selon l'une quelconque des revendications précédentes, dans lequel le deuxième morceau de pâte (4) est plié de telle sorte qu'un pli (12) soit orienté dans une direction de production (P).

7. Procédé selon l'une quelconque des revendications précédentes, comprenant en outre la séparation des premier et deuxième morceau de pâte (3, 4) d'un boudin de pâte (2) avant la disposition du premier morceau de pâte (3) sur le premier convoyeur.

8. Procédé selon la revendication 2, comprenant en outre la séparation des premier et deuxième morceau de pâte (3, 4) d'un boudin de pâte (2) avant le transfert du premier morceau de pâte (3) du deuxième convoyeur (9) au premier convoyeur (8).

9. Procédé selon la revendication 7 ou 8, dans lequel le premier et le deuxième morceau de pâte (3, 4) sont séparés et de préférence transportés successivement.

10. Procédé selon l'une des revendications précédentes, dans lequel, pendant la dépose, le deuxième convoyeur (9) présente une vitesse de transport plus élevée dans une direction de production (P) que le premier convoyeur (8).
